# EUROPEAN PATENT APPLICATION

(11) **EP 4 806 631 A1**
(43) Date of publication of application: **16.09.2026**
(21) Application number: 26164692.1
(22) Date of filing: 13.03.2026
(51) Int. Cl.: B32B 7/12, B32B 27/08, B32B 27/32, B32B 27/36

(54) **LAUNDRY TREATMENT COMPOSITON COMPRISING A DELIVERY PARTICLE**

(30) Priority: 14.03.2025 WO PCT/CN2025/082584
(71) Applicant: The Procter & Gamble Company, Cincinnati, OH 45202 (US)
(72) Inventor: CHENG, Zhan, Beijing, 101312 (CN); LIU, Ping, Beijing, 101312 (CN); ZHOU, Wandi, Beijing, 101312 (CN); PAN, Lichao, Beijing, 101312 (CN)
(74) Representative: P&G Patent Belgium UK

(57) **Abstract**

A packaged laundry product is provided in which the product comprises a laundry composition contained in a flexible packaging comprising post-consumer recycled (PCR) material.

## Description

### FIELD OF THE INVENTION

The present application is directed to a packaged laundry product comprising a laundry composition contained in a flexible packaging comprising post-consumer recycled (PCR) material.

### BACKGROUND OF THE INVENTION

Flexible plastic packaging for example flexible bags (also called pouches herein) are widely used in a variety of applications. One of the most important requirements for plastic packaging, especially for heavy duty plastic packaging of products such as detergent powders or liquids, is the mechanical strength of the thermoplastic material that is employed to prepare the plastic packaging, because the plastic packaging needs to resist impact to some extents and maintain packaging integrity till the end of the product usage.

Post-consumer recycled (PCR) material plays an increasingly important role in today's environmental sustainability initiatives and efforts. PCR provides a solution for industries to reprocess materials and reintroduce them into consumer products, which limits the consumption of new resources, allows for the recycling of consumed materials, and reduces the carbon footprint of new products. However, PCR is often composed of material blends including polymer blends, organic or inorganic materials and even contaminates. As a result, PCR and its properties are in general inferior and can vary greatly between batches, lots, or individual resins, resulting in challenges to effectively incorporate PCR to produce consumer goods with uniform, validated, or fit for use characteristics. Especially, the mechanical strength of flexible film made of PCR is often insufficient to resist impact during transportation and/or usage when it contains a relatively heavy contents for example detergent powders or liquids.

Therefore, there is a continuing need to provide a flexible plastic packaging composed of PCR which has a sufficient resistance to impact when containing heavy laundry products.

### SUMMARY OF THE INVENTION

The present disclosure provides a flexible plastic packaging comprising PCR which has a sufficient resistance to impact when containing heavy laundry products.

In one aspect, the present disclosure provides a packaged laundry product comprising at least 0.5 kg of a laundry composition contained in a flexible packaging, wherein the flexible packaging comprises a flexible laminate comprising a first layer, wherein the first layer is made of a first resin comprising a Post-Consumer Recycled (PCR) liner low-density polyethylene (LLDPE) having a Melting Flow Rate under 190°C/2.16kg of 0.2 to 2 g/10min, and a Notched Impact Strength under 4mm, 23°C of at least 30 KJ/m², wherein the laundry composition comprises a surfactant.

In another aspect, the present disclosure provides a flexible packaging for laundry products comprising at least 0.5 kg of a laundry composition, wherein the flexible packaging comprises a flexible laminate comprising a first layer, wherein the first layer is made of a first resin comprising a Post-Consumer recycled (PCR) liner low-density polyethylene (LLDPE) having a Melting Flow Rate under 190°C/2.16kg of 0.2 to 2 g/10min, and a Notched Impact Strength under 4mm, 23°C of at least 30 KJ/m².

It is an advantage of the flexible packaging to have sufficient mechanical strength to prevent leakage due to dropping from a height, stocking contents or stabbing by sharp objects.

It is another advantage of the flexible packaging to be capable of passing the dart impact test for laundry product bags.

These and other features, aspects and advantages of specific embodiments will become evident to those skilled in the art from a reading of the present disclosure.

### BRIEF DESCRIPTION OF THE DRAWINGS

The embodiments set forth in the drawings are illustrative in nature and not intended to limit the invention defined by the claims. The following detailed description of the illustrative embodiments can be understood when read in conjunction with the following drawings, and in which:
Figure 1 illustrates an embodiment of the laminate according to the present disclosure.
Figure 2 illustrates another embodiment of the laminate according to the present disclosure.

### DETAILED DESCRIPTION OF THE INVENTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims. All publications and patents cited herein are incorporated herein by reference.

The terms "flexible packaging" or "flexible packaging material" encompass various non-rigid containers familiar to the skilled person. These may include pouches, stand-up pouches, pillow pouches, bulk bags, or the like. Some typical end use applications for flexible packages are for snack, dry food, liquid, or cheese packages. Other end use applications include, but are not limited to, pet foods, snacks, chips, frozen foods, meats, hot dogs, and numerous other applications.

The terms "a first resin", "a second resin" and "a third resin" are intended to mean a raw material which is used for preparing a film or a layer of film. Such raw material can be a single-component raw material or a blend comprising a plurality of components.

The present disclosure is directed to a packaged laundry product comprising at least 0.5 kg of a laundry composition contained in a flexible packaging, wherein the flexible packaging comprises a flexible laminate comprising a first layer, wherein the first layer is made of a first resin comprising a Post-Consumer recycled (PCR) liner low-density polyethylene (LLDPE) having a Melting Flow Rate under 190°C/2.16kg of 0.2 to 2 g/10min, and a Notched Impact Strength under 4mm, 23°C of at least 30 KJ/m², wherein the laundry composition comprises a surfactant.

In some embodiments, the PCR LLDPE has a Melting Flow Rate under 190°C/2.16kg of 0.2 to 2 g/10min, preferably 0.3 to 1 g/10min, for example 0.3 g/10min, 0.4 g/10min, 0.5 g/10min, 0.6 g/10min, 0.7 g/10min, 0.8 g/10min or any ranges therebetween, as measured by GB/T 3682, and a Notched Impact Strength under 4mm, 23°C of 30 to 100 KJ/m², preferably 45 to 70 KJ/m², for example 50 KJ/m², 60 KJ/m², 70 KJ/m², 80 KJ/m², 90 KJ/m², or any ranges therebetween, as measured by GB/T 1843. Preferably, the PCR LLDPE further has a Tensile Strength under 50mm/min of 10 to 50 Mpa, for example 10 to 30 Mpa, as measured by GB/T 1040.2, a Flexural Strength under 2mm/min of 5 to 20 Mpa, for example 5 to 10 Mpa, as measured by GB/T 9341.

In some embodiments, the first resin comprises at least 10%, preferably at least 15%, more preferably at least 20%, yet more preferably at least 30%, most preferably 50%, of the PCR LLDPE by weight of the first resin.

Particularly, PE is generally divided into high-density (HDPE, density 0.941 g/cc or greater), medium-density (MDPE, density from 0.926 to 0.940 g/cc), low-density (LDPE, density from 0.910 to 0.925 g/cc), and linear low-density polyethylene (LLDPE, density from 0.910 to 0.925 g/cc). See e.g., ASTM D4976-98: Standard Specification for Polyethylene Plastic Molding and Extrusion Materials. In turn, these PE divisions can be further divided into mono-modal or multi-modal (e.g., bi-modal) sub-divisions.

One of the main uses of polyethylene (HDPE, LLDPE, and LDPE) is in film applications, such as grocery sacks, institutional and consumer can liners, merchandise bags, shipping sacks, food packaging films, multi-wall bag, liners, produce bags, stretch wraps, shrink wraps, and the like. The key physical properties of PE-based film layer may include tear strength, impact strength, tensile strength, stiffness, and transparency. Different combinations of PE divisions, and sub-divisions be used herein depending upon the application and/or desired film property. In some embodiments, the PE component in the laminate of the present disclosure, will comprise some level of a linear low density polyethylene (LLDPE) polymer.

At least one layer of the laminate according to the present disclosure comprises 70% to 100%, by weight of the at least one layer of the film of a PE component. Preferably the at least one layer of the film comprises from 75% to 99%, more preferably 80% to 98%, yet more preferably 82% to 97%, by weight of the at least one layer, of the PE component.

In some embodiments, the flexible laminate further comprises a second layer which is made of a second resin, wherein the second resin comprises a polyethylene terephthalate (PET) which is preferably a PCR PET, or wherein the second resin comprises a LLDPE which is preferably a PCR LLDPE having a Melting Flow Rate under 190°C/2.16kg of 0.2 to 2 g/10min as measured by GB/T 3682, a Notched Impact Strength under 4mm, 23°C of at least 30 KJ/m² as measured by GB/T 1843.

In some embodiments, the flexible laminate further comprises a third layer which is made of a third resin, wherein the third resin comprises a polyethylene terephthalate (PET) which is preferably a PCR PET or vacuum metallized PET, or wherein the third resin comprises a LLDPE which is preferably a PCR LLDPE having a Melting Flow Rate under 190°C/2.16kg of 0.2 to 2 g/10min as measured by GB/T 3682, a Notched Impact Strength under 4mm, 23°C of at least 30 KJ/m² as measured by GB/T 1843.

In some embodiments, the second resin comprises at least 10%, preferably at least 15%, more preferably at least 20%, yet more preferably at least 30%, most preferably 50%, of the PCR LLDPE or PCR PET by weight of the second resin, and/or wherein the third resin comprises at least 10%, preferably at least 15%, more preferably at least 20%, yet more preferably at least 30%, most preferably 50%, of the PCR LLDPE or PCR PET by weight of the third resin.

In some embodiments, the first resin, the second resin, or the third resin may further comprise one or more additional polymers including, for example, a high density polyethylene, a low density polyethylene, an ultra-low density polyethylene, a polyethylene plastomer, a polyethylene elastomer, an ethylene vinyl acetate, or a combination thereof.

In some embodiments, the first resin, the second resin, or the third resin may further comprise one or more additives as known to those of skill in the art such as, for example, an ethylene-based polymer, antioxidants, phosphites, cling additives, anti-static agents, pigments, colorants, fillers, or combinations thereof.

In some embodiments, the first resin, the second resin, or the third resin may further comprise from 3 to 25 wt.% of a modification agent. The modification agent is an ethylene -based plastomer or elastomer, or an ethylene-vinyl acetate, or a combination thereof. In certain embodiments, the modification agent is an ethylene-based plastomer or elastomer, and the polymer blend comprises from 3 to 25 wt.% of an ethylene-based plastomer or elastomer having a density in the range of from 0.857 to 0.910 g/cm³. In other embodiments, the modification agent is an ethylene-vinyl acetate, and the polymer blend comprises from 3 to 25 wt.% of an ethylene-vinyl acetate.

In some embodiments, the PCR further comprises residue from its original use, such as paper, adhesive, ink, nylon, ethylene vinyl alcohol (EVOH), polyamide (PA), polyethylene terephthalate (PET), and other organic or inorganic material.

In some embodiments, said laundry composition has a weight of from 0.5 kg to 10 kg, preferably from 1 kg to 7 kg, more preferably from 1.5kg to 5 kg, for example 0.5 kg, 1 kg, 1.5 kg, 2 kg, 2.5 kg, 3 kg, 4kg, 5 kg, 6 kg, 7 kg, or any ranges therebetween.

In some embodiments, the surfactant is selected from the group consisting of C₁₀-C₁₈ linear or branched unalkoxylated alkyl sulfate (AS) surfactant, a C₁₂-C₁₈ linear alkyl benzene sulphonate (LAS) surfactant, a C₁₀-C₂₀ linear or branched alkylalkoxylated sulfate (AAS) surfactant, a methyl ester fatty acid sulphonate (MES) surfactant and any combinations thereof.

In some embodiments, the total thickness of the laminate is from 30 microns to 400 microns, preferably from 60 microns to 300 microns, more preferably from 70 microns to 200 microns, most preferably from 80 microns to 150 microns; and/or wherein the first layer has a thickness of from 30 microns to 150 microns, preferably from 40 microns to 130 microns, more preferably from 50 microns to 110 microns, most preferably from 60 microns to 100 microns; and/or wherein the second layer has a thickness of from 5 microns to 50 microns, preferably from 7 microns to 40 microns, more preferably from 9 microns to 30 microns, most preferably from 10 microns to 25 microns; and/or wherein the third layer has a thickness of from 5 microns to 50 microns, preferably from 7 microns to 40 microns, more preferably from 9 microns to 30 microns, most preferably from 10 microns to 25 microns.

In some embodiments, the layer of PCR LLDPE can be a layer of machine direction oriented polyethylene (MDO-PE). The machine direction (MD) is also known as the longitudinal direction (generally perpendicular to the traverse direction (TD)). MD orientating is a preferred initial step after an unconverted film is formed. During the MD orientation, the unconverted film from the blown or casted line is heated to an orientation temperature via one or multiple hot rollers. The heated film is fed into a slow draw roll with a nip roller, which has the same rolling speed as the heating rollers. The film then enters a fast draw roll. The fast draw roll has a speed that is 2 to 10 times faster than the slow draw roll, which effectively stretches the film on a continuous basis. There can be another fast draw roll which is even faster than the first fast draw roll so that the film is subjected to two step stretching. Between the two stretching steps there is another set of heating rolls which sets the temperature of the film after the first stretching and before the second stretching. The temperatures in these two stretching steps can be the same or different. The orientation can also be a single stretching instead of two step stretching. The total MD stretch ratio is from 2:1 to 10:1, more preferably from 3:1 to 9:1, and even more preferably from 5:1 to 8:1. The total MD stretch ratio includes all orientation steps. For example, if a two-step orientation is used with first stretch ratio 2:1 and second stretch ratio 3:1, the total stretch ratio is therefore 6:1. The orientation temperature in a MD orientation, is around 50° C to below 140° C, preferably below 130° C, more preferably below 120° C, alternatively 60° C to 120° C, or below 115° C, or from 70° C to 115° C. The temperature also depends on the process speed. In general, higher process speed requires relatively higher temperature due to the relative shorter contacting time between film and hot rollers; while slower process speed requires relatively lower temperature due to the longer contacting time.

In some embodiments, the layer of PCR LLDPE can be a layer of biaxial oriented polyethylene (BO-PE). BO-PE film is a film stretched in both MD and TD, resulting in molecular chain orientation in two directions. One of the common processes for preparing BO-PE is the sequential process, in which a thick extruded sheet is heated to its softening point (not to the melting point) and is mechanically drawn in the machine direction using heated rollers and subsequently drawn in the transverse direction, i.e. orthogonally to the direction of travel, in a heated oven. It is also possible to draw the film in both directions simultaneously, although the equipment required for this is somewhat more elaborate. Particularly, BO-PE may be produced by a tubular process, in which a tubular bubble is inflated, or a tenter frame process, in which a thick extruded sheet is heated to its softening point (not to the melting point) and is mechanically stretched. The MD stretch ratio may be from 4.5:1 to 6:1, and the TD stretch ratio may be from 7:1 to 8:1, although these ratios are fully adjustable.

In a particular embodiment, the laminate comprises a first layer of PCR LLDPE and a second layer of PET in sequence. In another particular embodiment, the laminate comprises a first layer of PCR LLDPE and a second layer of PCR PET in sequence. In another particular embodiment, the laminate comprises a first layer of PCR LLDPE and a second layer of PCR LLDPE in sequence. In another particular embodiment, the laminate comprises a first layer of PCR LLDPE, a second layer of PCR LLDPE and a third layer of PET in sequence. In another particular embodiment, the laminate comprises a first layer of PCR LLDPE which is MDO-PE, a second layer of PCR LLDPE which is BO-PE and a third layer of PCR LLDPE as a sealant in sequence.

In some embodiments, said laminate has a tensile strength along the machine direction as measured by the method according to Test 1 of more than 80 N/inch, preferably more than 90 N/inch, more preferably more than 100 N/inch; and/or wherein said laminate has a tensile strength along the transverse direction as measured by the method according to Test 1 of more than 80 N/inch, preferably more than 90 N/inch, more preferably more than 100 N/inch; and/or wherein said laminate has a dart impact strength as measured by the method according to Test 2 of more than 450 g, preferably more than 550 g, more preferably more than 600 g.

The films, the laminates and/or the layers according to the present disclosure may be made by conventional fabrication techniques, e.g. simple bubble extrusion, biaxial orientation processes (such as tenter frames or double bubble processes), simple cast/sheet extrusion, co-extrusion, lamination, and the like.

In some embodiments, the laundry composition is in the form of granules which are characterized by: a bulk density ranging from 200 g/L to 2000 g/L, preferably from 300 g/L to 1500 g/L, more preferably from 400 g/L to 1200 g/L, most preferably from 500 g/L to 1000 g/L; and/or a particle size distribution characterized by a D50 ranging from 10 micron to 1000 microns, preferably from 50 microns to 800 microns, more preferably from 100 micron to 700 microns, most preferably from 200 microns to 600 microns.

In some embodiments, the laundry composition is in the form of particles which are characterized by: a mass of from about 1 mg to about 1000 mg, preferably from about 5 mg to about 500 mg, more preferably from about 5 mg to about 200 mg, most preferably from about 10 mg to about 100 mg; a volume of from 0.002 cm³ to 1 cm³, preferably from 0.01 cm³ to 0.5 cm³, more preferably from 0.05 cm³ to 0.5 cm³; a bulk density ranging from 200 g/L to 2000 g/L, preferably from 300 g/L to 1500 g/L, more preferably from 400 g/L to 1200 g/L, most preferably from 500 g/L to 950 g/L.

In some embodiments, the laundry composition is in the form of liquid.

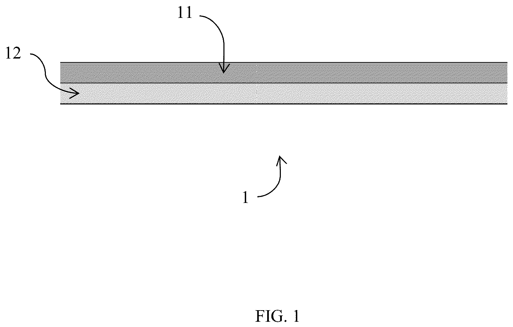

FIG. 1 illustrates a laminate 1 comprising a first layer 11 of PCR LLDPE, and a second layer 12 of PET, in which adhesive between layers are not shown.

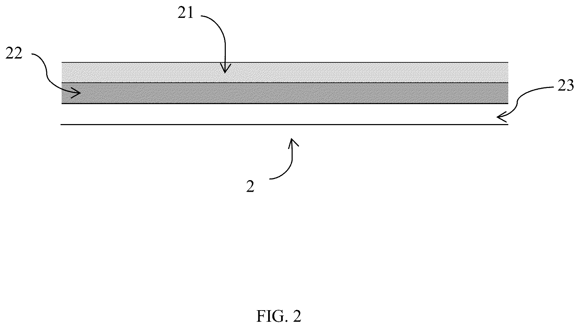

FIG. 2 illustrates a laminate 2 comprising a first layer 21 of PCR LLDPE (MDO-PE), a second layer 22 of PCR LLDPE (BO-PE), and a third layer 23 of PCR PE, in which adhesive between layers are not shown.

### Test Method

### Test 1. Tensile strength test

The tensile strength is measured on an Instron tensile tester under room temperature along both the machine direction and the transverse direction generally in accordance with ASTM D882 and GCAS 58110435. The samples are obtained by cutting the body or the bottom of bags into film strips having a width of 25.4mm and a length of 150mm. Tensile tester (cross head) moving speed is 500mm/min. The breaking force for each film strip is recorded as the outcome, i.e., the tensile strength along the machine direction and the tensile strength along the transverse direction.

### Test 2. Dart impact strength test

The dart impact strength is measured generally based on ASTM D1709-15a. Particularly, a dart with a rounded tip (i.e. hemispherical head) having the curvature radius of ~19 mm and a thin long stem with cylindrical metal weights on it is dropped from a height of 660 mm perpendicularly to the surface of a piece of thin polymer film fastened by a specimen clamp which is a two-piece annular clamp having an inside diameter of 127 mm (5"). The mass of the dart can be varied over a wide range by changing the weights on the stem. The film is usually tested about 20 times at different dart weights until its partial or complete rupture occurs. The mass of the dart is varied to determine the average dart mass needed to break the film. The DIS value of the film, m (g), is defined as the maximum dart mass the film can sustain without breaking, it is equal to the minimum mass needed to break the film.

### EXAMPLES

### Example 1. Qualified Detergent Pouches Made of PCR LLDPE

Pillow bags for laundry detergent powders were made respectively using different laminates in which Laminates 1 and 2 had a 2-layer structure (PCR LLDPE and PET) containing a PCR PE layer and Comparative Laminates 1 and 2 had a 2-layer structure (LLDPE and PET) containing a non-PCR PE layer. Each laminate was prepared by dry lamination, in which an adhesive was applied on one layer of film, dried and then put another layer of film onto the adhesive surface to form bond. The specific structures of the laminates are shown in the following Table 1. The pillow bags were made by using conventional processes.

**Table 1. Structures of laminates**

| | Laminate 1 | Laminate 2 | Comparative Laminate 1 | Comparative Laminate 2 |
|---|---|---|---|---|
| Outer layer | PET 12 µm | PET 12 µm | PET 12 µm | PET 12 µm |
| Inner layer | PCR-LLDPE¹ 90 µm | PCR-LLDPE ² 80 µm | LLDPE³ 90 µm | LLDPE³ 80 µm |

| | | | | |
|---|---|---|---|---|
| 1: PCR-LLDPE yelo-PE-010608 (Melting Flow Rate under 190°C/2.16kg as measured by GB/T 3682: 0.64 g/10min; Notched Impact Strength under 4mm, 23°C as measured by GB/T 1843: 36 KJ/m²; Tensile Strength under 50mm/min as measured by GB/T 1040.2: 14.8 Mpa; and Flexural Strength under 2mm/min as measured by GB/T 9341: 4.2 Mpa) from Shanghai Yelolife Resource Regeneration Tech Co., Ltd., Shanghai, China. 2: PCR-LLDPE yelo-PE-010305 (Melting Flow Rate under 190°C/2.16kg as measured by GB/T 3682: 0.33 g/10min; Notched Impact Strength under 4mm, 23°C as measured by GB/T 1843: 53 KJ/m²; Tensile Strength under 50mm/min as measured by GB/T 1040.2: 15 Mpa; and Flexural Strength under 2mm/min as measured by GB/T 9341: 9.5 Mpa) and PCR-LLDPE yelo-PE-010608 from Shanghai Yelolife Resource Regeneration Tech Co., Ltd., Shanghai, China. 3: PG80u/PG90u (non-PCR resin with the same composition) from Hebei Beiren New Material Ltd, China. | | | | |

The tensile strength test was conducted according to Test 1 and the dart impact strength test was conducted according to Test 2. The results as shown in the table below indicate Laminates 1 and 2 containing PCR PE were qualified for bags of laundry detergent powder, which is surprising because previous attempts showed PCR-containing laminate cannot provide a sufficient strength for heavy laundry products. Particularly, the tensile strength and dart impact strength are comparable between the PCR laminate (i.e., Laminates 1 and 2) and the non-PCR laminate (i.e., Comparative Laminates 1 and 2).

**Table 2. Results of the tensile strength test and dart impact strength test**

| | MD Tensile strength¹ (N/inch) | CD Tensile strength² (N/inch) | Dart impact strength³(g) |
|---|---|---|---|
| Laminate 1 | 104.9 | 97.1 | 597 |
| Laminate 2 | 104.0 | 102.8 | 657 |
| Comparative Laminate 1 | 89.2 | 85.2 | 684 |
| Comparative Laminate 2 | 86.7 | 83.4 | 605 |

| | | | |
|---|---|---|---|
| 1: The criteria is >80 N/inch according to Minimum Performance and Material Properties (MPMP). 2: The criteria is >70 N/inch according to MPMP. 3: The criteria is >450 g according to MPMP. | | | |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A packaged laundry product comprising at least 0.5 kg of a laundry composition contained in a flexible packaging, wherein the flexible packaging comprises a flexible laminate comprising a first layer,
wherein the first layer is made of a first resin comprising a Post-Consumer Recycled (PCR) liner low-density polyethylene (LLDPE) having a Melting Flow Rate under 190°C/2.16kg of 0.2 to 2 g/10min, and a Notched Impact Strength under 4mm, 23°C of at least 30 KJ/m², wherein the laundry composition comprises a surfactant and/or a perfume.

2. The packaged laundry product according to claim 1, wherein the first resin comprises at least 10%, preferably at least 15%, more preferably at least 20%, yet more preferably at least 30%, most preferably at least 50%, of the PCR LLDPE by weight of the first resin.

3. The packaged laundry product according to claim 1, wherein the PCR LLDPE has a Melting Flow Rate under 190°C/2.16kg of 0.3 to 1 g/10min, preferably 0.3 to 0.5 g/10min as measured by GB/T 3682, and a Notched Impact Strength under 4mm, 23°C of 30 to 100 KJ/m², preferably 45 to 70 KJ/m² as measured by GB/T 1843.

4. The packaged laundry product according to any one of claims 1 to 3, wherein the flexible laminate further comprises a second layer which is made of a second resin,
wherein the second resin comprises a polyethylene terephthalate (PET) which is preferably a PCR PET, or
wherein the second resin comprises a LLDPE which is preferably a PCR LLDPE having a Melting Flow Rate under 190°C/2.16kg of 0.2 to 2 g/10min as measured by GB/T 3682, a Notched Impact Strength under 4mm, 23°C of at least 30 KJ/m² as measured by GB/T 1843.

5. The packaged laundry product according to claim 4, wherein the flexible laminate further comprises a third layer which is made of a third resin,
wherein the third resin comprises a polyethylene terephthalate (PET) or vacuum metallized PET which is preferably a PCR PET, or
wherein the third resin comprises a LLDPE which is preferably a PCR LLDPE having a Melting Flow Rate under 190°C/2.16kg of 0.2 to 2 g/10min as measured by GB/T 3682, a Notched Impact Strength under 4mm, 23°C of at least 30 KJ/m² as measured by GB/T 1843.

6. The packaged laundry product according to claim 4 or 5, wherein the second resin comprises at least 10%, preferably at least 15%, more preferably at least 20%, yet more preferably at least 30%, most preferably at least 50%, of the PCR LLDPE or PCR PET by weight of the second resin, and
wherein the third resin comprises at least 10%, preferably at least 15%, more preferably at least 20%, yet more preferably at least 30%, most preferably at least 50%, of the PCR LLDPE or PCR PET by weight of the third resin.

7. The packaged laundry product according to any one of claims 1 to 6, wherein said laundry composition has a weight of from 0.5 kg to 10 kg, preferably from 1 kg to 7 kg, more preferably from 1.5kg to 5 kg.

8. The packaged laundry product according to any one of claims 1 to 7, wherein the surfactant is selected from the group consisting of C₁₀-C₁₈ linear or branched unalkoxylated alkyl sulfate (AS) surfactant, a C₁₂-C₁₈ linear alkyl benzene sulphonate (LAS) surfactant, a C₁₀-C₂₀ linear or branched alkylalkoxylated sulfate (AAS) surfactant, a methyl ester fatty acid sulphonate (MES) surfactant and any combinations thereof.

9. The packaged laundry product according to any one of claims 1 to 8, wherein the total thickness of the laminate is from 30 microns to 400 microns, preferably from 60 microns to 300 microns, more preferably from 70 microns to 200 microns, most preferably from 80 microns to 150 microns; and/or
wherein the first layer has a thickness of from 20 microns to 150 microns, preferably from 40 microns to 130 microns, more preferably from 50 microns to 110 microns, most preferably from 60 microns to 100 microns; and/or
wherein the second layer has a thickness of from 5 microns to 50 microns, preferably from 7 microns to 40 microns, more preferably from 9 microns to 30 microns, most preferably from 10 microns to 25 microns; and/or
wherein the third layer has a thickness of from 5 microns to 50 microns, preferably from 7 microns to 40 microns, more preferably from 9 microns to 30 microns, most preferably from 10 microns to 25 microns.

10. The packaged laundry product according to any one of claims 1 to 9, wherein said laminate has a tensile strength along the machine direction as measured by the method according to Test 1 of more than 80 N/inch, preferably more than 90 N/inch, more preferably more than 100 N/inch; and/or
wherein said laminate has a tensile strength along the transverse direction as measured by the method according to Test 1 of more than 80 N/inch, preferably more than 90 N/inch, more preferably more than 100 N/inch; and/or
wherein said laminate has a dart impact strength as measured by the method according to Test 2 of more than 450 g, preferably more than 550 g, more preferably more than 600 g.

11. The packaged laundry product according to any one of the preceding claims, wherein the laundry composition is in the form of granules which are **characterized by**:
• a bulk density ranging from 200 g/L to 2000 g/L, preferably from 300 g/L to 1500 g/L, more preferably from 400 g/L to 1200 g/L, most preferably from 500 g/L to 1000 g/L; and/or
• a particle size distribution **characterized by** a D50 ranging from 10 micron to 1000 microns, preferably from 50 microns to 800 microns, more preferably from 100 micron to 700 microns, most preferably from 200 microns to 600 microns.

12. The packaged laundry product according to any one of the preceding claims, wherein the laundry composition is in the form of particles which are **characterized by**:
• a mass for each particle of from about 1 mg to about 1000 mg, preferably from about 5 mg to about 500 mg, more preferably from about 5 mg to about 200 mg, most preferably from about 10 mg to about 100 mg; and/or
• a volume for each particle of from 0.002 cm³ to 1 cm³, preferably from 0.01 cm³ to 0.5 cm³, more preferably from 0.05 cm³ to 0.5 cm³; and/or
• a bulk density ranging from 200 g/L to 2000 g/L, preferably from 300 g/L to 1500 g/L, more preferably from 400 g/L to 1200 g/L, most preferably from 500 g/L to 950 g/L.

13. A flexible packaging for laundry products comprising at least 0.5 kg of a laundry composition, wherein the flexible packaging comprises a flexible laminate comprising a first layer,
wherein the first layer is made of a first resin comprising a Post-Consumer Recycled (PCR) liner low-density polyethylene (LLDPE) having a Melting Flow Rate under 190°C/2.16kg of 0.2 to 2 g/10min, and a Notched Impact Strength under 4mm, 23°C of at least 30 KJ/m².
